(19) Europäisches Patentamt
European Patent Office
Office européen des brevets

(11) EP 0 523 672 B1

(12) EUROPÄISCHE PATENTSCHRIFT

(45) Veröffentlichungstag und Bekanntmachung des Hinweises auf die Patenterteilung:
**09.10.1996 Patentblatt 1996/41**

(51) Int Cl.6: **C08F 220/18**, C10L 1/18, C10M 145/14

(21) Anmeldenummer: **92112100.0**

(22) Anmeldetag: **15.07.1992**

(54) **Copolymere aus ethylenisch ungesättigten Carbonsäureestern mit Polyoxyalkylenethern von niederen, ungesättigten Alkoholen als Fliessverbesserer für paraffinhaltige Öle**

Esters of copolymers of ethylenic unsaturated carboxylic acid and polyoxyalkylenether of lower, unsaturated alcohols as flow improvers of paraffin-containing oils

Copolymères d'esters d'acides carboxyliques éthyléniquement insaturés et de polyalkylenether d'alcools inférieurs insaturés comme agents modifiant l'écoulement de pétroles contenant de la paraffine

(84) Benannte Vertragsstaaten:
**AT DE FR GB IT NL**

(30) Priorität: **18.07.1991 DE 4123795**

(43) Veröffentlichungstag der Anmeldung:
**20.01.1993 Patentblatt 1993/03**

(73) Patentinhaber: **HOECHST AKTIENGESELLSCHAFT**
**65926 Frankfurt am Main (DE)**

(72) Erfinder:
- **Krull, Matthias, Dr.**
  **W-6232 Bad Soden/Taunus (DE)**
- **von Halasz, Sigmar-Peter, Dr.**
  **W-6237 Liederbach am Taunus (DE)**
- **Reimann, Werner, Dr.**
  **W-4200 Oberhausen-Holten (DE)**
- **Balzer, Juliane**
  **W-6000 Frankfurt am Main (DE)**
- **Geiss, Horst**
  **W-6234 Hattersheim am Main (DE)**

(56) Entgegenhaltungen:
**FR-A- 1 225 980** **GB-A- 2 174 096**
**US-A- 3 192 165**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 523 672 B1

**Beschreibung**

Die Erfindung betrifft die Verwendung von Copolymeren aus ethylenisch Die Erfindung betrifft die Verwendung von Copolymeren aus ethylenisch ungesättigten Carbonsäureestern mit Polyoxyalkylenethern des Allyl- und/oder Methallylalkohols als Fließverbesserer für paraffinhaltige Öle.
Die Erfindung betrifft auch neue Copolymere aus ethylenisch ungesättigten Carbonsäureestern mit Polyoxyalkylenethern von niederen, ungesättigten Alkoholen, deren Herstellung, deren Verwendung als Fließverbesserer für paraffinhaltige Öle udn Öle, die solche Copolymere enthalten.

Rohöle, Rückstandsöle, Öldestillate, wie z.B. Dieselkraftstoff, Mineralöle, Schmieröle, Hydrauliköle usw. enthalten je nach ihrer Herkunft oder der Art ihrer Verarbeitung mehr oder weniger große Anteile an n-Paraffinen und Asphaltenen, die besondere Probleme darstellen, weil sie bei Erniedrigung der Temperatur auskristallisieren bzw. agglomerieren und dadurch zur Verschlechterung der Fließeigenschaften dieser Öle führen können. Diese Verschlechterung der Fließeigenschaften der Öle bezeichnet man als "Stocken" des Öles. Der Stockpunkt ist die normierte Bezeichnung für diejenige Temperatur bei der ein Öl z.B. Mineralöl, Dieselkraftstoff oder Hydraulikflüssigkeit gerade eben zu fließen aufhört. Der Stockpunkt (Pourpoint) ist jedoch nicht identisch mit dem sogenannten Fließpunkt. Der Fließpunkt ist eine unspezifische, nicht durch Normen abgedeckte Bezeichnung für diejenige Temperatur, bei der ein Feststoff unter gegebenen Meßbedingungen zu fließen beginnt. Durch die Verschlechterung der Fließeigenschaften können dann beispielsweise beim Transport, bei der Lagerung und/oder der Verarbeitung dieser Öle Behälter, Rohrleitungen, Ventile oder Pumpen verstopfen, insbesondere bei paraffinhaltigen Ölen, die schwierig zu inhibieren sind. Besondere paraffinhaltigen Ölen, die schwierig zu inhibieren sind. Besondere Schwierigkeiten treten in der Praxis dann auf, wenn der Eigenstockpunkt dieser Öle oberhalb der Umgebungstemperatur, insbesondere bei 20°C oder darüber liegt. In Anbetracht der abnehmenden Welterdölvorräte und zunehmender Erschließung von Lagerstätten, die Rohöle mit hohen Eigenstockpunkten liefern, erlangen die Förderung und der Transport derartiger Problemöle eine immer größer werdende Bedeutung.

Zur Wiederherstellung oder Aufrechterhaltung der Fließfähigkeit gibt es eine Reihe von Maßnahmen thermischer oder mechanischer Art, z. B. das Abkratzen des Paraffins von der Rohrinnenwand, das Beheizen ganzer Pipelines oder Spülvorgänge mit Lösungsmitteln. Eleganter ist sicherlich die ursächliche Bekämpfung des Phänomens durch Zugabe von Fließverbesserern, die auch als Stockpunktserniedriger (pour point depressants) oder Paraffininhibitoren bezeichnet werden. Dabei ist im allgemeinen eine Erniedrigung des Stockpunkts auf Werte von etwa 10°C und darunter vorteilhaft.

Die Wirkungsweise dieser Fließverbesserer wird im allgemeinen dadurch erklärt, daß sie die Kristallisation von Paraffinen und Asphaltenen inhibieren. Die Folge ist eine Absenkung des Stockpunktes und die Aufrechterhaltung der Fließfähigkeit des Öls bei niedriger Temperatur. Die Wirksamkeit der Fließverbesserer hängt dabei sowohl von ihrer Konstitution als auch von ihrer Konzentration ab.

Bei Fließverbesserern handelt es sich im allgemeinen um Homo- oder Copolymere auf Basis von Olefinen, (Meth-) Acrylsäureestern, Maleinsäurederivaten und bestimmten Vinylmonomeren.
So sind aus GB-A-1 368 729 Homopolymere von Acrylsäureestern mit $C_{18}$- bis $C_{24}$-Alkylketten im Alkoholrest für die Anwendung als Stockpunktserniedriger in Roh- und Rückstandsölen bekannt. Aus US-A-5 039 432 sind Copolymere aus in freier (Meth-)Acrylsäure und langkettigen (Meth-)Acrylsäureestern als aus Fließverbesserer für Roh- und Rückstandsöle bekannt.

Ester von Polyoxyalkylenethern sind in verschiedener Form als Fließverbesserer beschrieben.

Aus EP-A-0 183 447 sind Copolymere aus Estern der Fumarsäure mit Polyoxyalkylenglykolen bekannt. Copolymere aus 1-Alkenen und dem (Meth-) Acrylsäureester eines $C_{10}$- bis $C_{24}$- Alkylpolyoxyalkylenethers (EP-B-0 220 611), Copolymere aus (Meth-)Acrylsäureestern mit über ein Heteroatom alkoxylierten cyclischen Kohlenwasserstoffen (DE-A-3 711 344) sowie Mischungen aus Fettsäureestern von Polyoxyalkylenethern und $C_{10}$- bis $C_{30}$-Fumarsäureestern von Polyoxyalkylenethern (US-A-4 891 145) sind als Fließverbesserer für Rohöle bzw. paraffinreiche Erdölfraktionen bekannt. Aus EP-A-0 418 610 sind Copolymere aus Alkyl(meth-)acrylaten und Estern von Alkylpolyoxyalkylenethern mit (Meth-)Acrylsäure als Öladditive in Diesel- und Ottomotoren bekannt. Copolymere aus Polyoxyalkylenethern des (Meth-)Allylalkohols und $C_1$ bis $C_{20}$-(Meth-)Acrylsäurealkylestern sind in GB-A-2 174 096 beschrieben. Diese Copolymeren werden jedoch als Demulgatoren für Rohölemulsionen verwendet.

Nachteilig bei den bekannten Fließverbesserern für Roh- und Rückstandsöle sind die noch nicht ausreichende Wirksamkeit und die daraus resultierenden hohen Einsatzkonzentrationen. Weiterhin nachteilig sind die hohen Eigenstockpunkte der Fließverbesserer, die für die Dosierung eine Erwärmung und/oder eine sehr starke Verdünnung erfordern.

Es werden deshalb Copolymere gesucht, die verbesserte Eigenschaften als Stockpunktserniedriger aufweisen, d. h. die auch bei geringer Dosierung noch genügende Wirksamkeit besitzen und im Vergleich mit Stockpunktserniedrigern des Standes der Technik bei gleich hoher Konzentration einen niedrigeren Eigenstockpunkt haben und bei einer Vielzahl von Ölen, insbesondere bei paraffinhaltigen Ölen wirksam sind.

Die Erfindung betrifft die Verwendung von Copolymeren aus ethylenisch ungesättigten Carbonsäureestern mit Polyoxyalkylenethern des Allyl- und/oder Methallylalkohols als Fließverbesserer für paraffinhaltige Öle.

Aus GB-A-2 174 096 ist die Verwendung von Copolymeren aus Polyoxyalkylenethern des (Meth-)Allylalkohols und $C_1$- bis $C_{20}$-(meth-) Acrylsäurealkylestern als Demulgatoren für Wasser enthaltendes Rohöl bekannt.

Überraschenderweise wurde gefunden, daß die aus GB-A-2 174 096 bekannten Copolymeren durch deutliche Absenkung des Stockpunkts von paraffinhaltigen Ölen deren Fließfähigkeit besonders wirkungsvoll verbessern und daß Lösungen dieser Copolymeren in aromatischen Lösemitteln gleichzeitig einen sehr niedrigen Eigenstockpunkt aufweisen. Darüberhinaus wurde gefunden, daß diese Copolymeren in Abmischung mit bekannten Homopolymeren aus Acrylsäureestern bzw. Methacrylsäureestern langkettiger $C_{18}$- bis $C_{24}$-Fettalkohole, wie sie z.B. aus GB-A-1 368 729 bekannt sind, besonders wirksam sind.

Die vorliegende Erfindung betrifft auch Copolymere aus ethylenisch ungesättigten Carbonsäureestern mit Polyoxyalkylenethern von niederen, ungesättigten Alkoholen, deren Herstellung, deren Verwendung als Fließverbesserer für paraffinhaltige Öle und Öle, die solche Copolymere enthalten.

Somit sind ein Gegenstand der vorliegenden Erfindung Copolymere enthaltend 50 bis 99,9 Gew.-%, bevorzugt 70 bis 99,9 Gew.-% mindestens eines wiederkehrenden Strukturelementes der Formel I

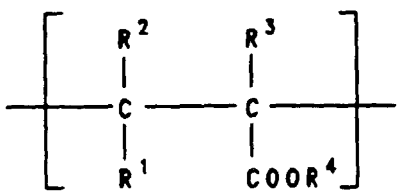

(I)

worin

$R^1$ und $R^2$ unabhängig voneinander für Wasserstoff, Phenyl oder eine Gruppe der Formel $COOR^4$ stehen,
$R^3$ für Wasserstoff, Methyl oder eine Gruppe der Formel $CH_2COOR^4$ steht, oder $R^2$ und $R^3$ zusammen für $C_4$-bis $C_7$-Alkylen stehen und
$R^4$ für Wasserstoff, $C_8$- bis $C_{40}$-Alkyl oder $C_8$-$C_{40}$-Alkenyl steht,

mit der Maßgabe, daß wiederkehrende Strukturelemente der Formel I mindestens eine, höchstens zwei Carbonsäureeinheiten der Formeln $COOR^4$, $CH_2COOR^4$ in einem Strukturelement enthalten
und 0,1 bis 50 Gew.-%, bevorzugt 0,1 bis 30 Gew-% mindestens eines wiederkehrenden Strukturelementes der Formel II

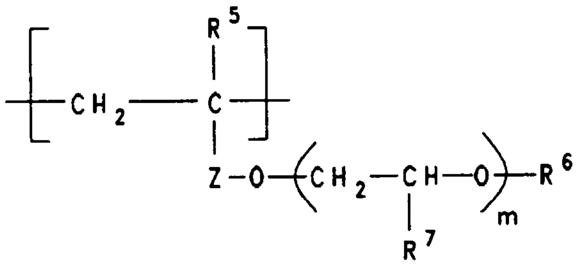

(II)

worin

$R^5$ für Wasserstoff oder Methyl steht,
Z für $C_1$- bis $C_3$-Alkylen steht,
$R^6$ für Wasserstoff, $C_1$- bis $C_{30}$-Alkyl, Cycloalkyl, Aryl oder -C(O)-$R^8$ steht,
$R^7$ für Wasserstoff, $C_1$- bis $C_{20}$-Alkyl steht,
$R^8$ für $C_1$- bis $C_{30}$-Alkyl, $C_3$- bis $C_{30}$-Alkeny, Cycloalkyl oder Aryl steht und
m eine Zahl von 1 bis 60, vorzugsweise zwischen 1 und 30 bedeutet, mit der Maßgabe, daß falls $R^6$ gleich Wasserstoff ist, $R^1$ und $R^2$ nicht gleichzeitig Wasserstoff sind.

Besonders geeignet sind Copolymere, worin $R^1$ und $R^2$ unabhängig voneinander für Wasserstoff oder eine Gruppe der Formel $COOR^4$ stehen, $R^4$ für $C_{10}$- bis $C_{24}$-Alkyl steht, $R^6$ für Wasserstoff oder $C_1$- bis $C_{24}$-Alkyl steht, $R^7$ für

Wasserstoff oder Methyl steht und $R^8$ für $C_1$- bis $C_{22}$- Alkyl oder Phenyl steht.

Die erfindungsgemäßen Copolymeren besitzen Strukturelemente der Formel I, worin $R^4$ eine lineare oder verzweigte Alkylkette mit 8 bis 40 Kohlenstoffatomen, bevorzugt 10 bis 24 Kohlenstoffatomen oder eine lineare oder verzweigte Alkenylkette mit 8 bis 40 Kohlenstoffatomen sein kann.

Ebenfalls sehr gut geeignet sind Copolymere, worin R1 und $R^2$ unabhängig voneinander für Wasserstoff oder $COOR^4$ stehen, $R^4$ für $C_{10}$- bis $C_{24}$-Alkyl steht, $R^6$ für Wasserstoff oder Methyl steht, $R^7$ für Wasserstoff oder Methyl steht und $R^8$ für $C_1$- bis $C_{22}$-Alkyl oder Phenyl steht.

Besonders bevorzugt sind Copolymere, worin $R^1$ und $R^2$ für Wasserstoff stehen, $R^3$ für Wasserstoff oder Methyl steht und $R^6$ für Wasserstoff steht.

Die erfindungsgemäßen Copolymeren besitzen Strukturelemente der Formel II, worin $R^6$ lineare oder verzweigte Alkylketten mit bis zu 30 Kohlenstoffatomen, bevorzugt mit bis zu 24 Kohlenstoffatomen, Cycloalkylreste oder Aryleste, $R^7$ lineare oder verzweigte Alkylketten mit bis zu 20 Kohlenstoffatomen, bevorzugt Methyl und $R^8$ lineare oder verzweigte Alkylketten mit bis zu 30 Kohlenstoffatomen, bevorzugt bis zu 22 Kohlenstoffatomen, lineare oder verzweigte Alkenylketten mit 2 bis 30 Kohlenstoffatomen, Cycloalkylreste oder Arylreste, bevorzugt Phenyl sein können.
Die Cycloalkylreste besitzen im allgemeinen eine Ringgröße von 5 bis 7 Kohlenstoffatomen, können gesättigt oder ungesättigt sein und/oder ein bis mehrere Heteroatome, wie S, O, N enthalten. Geeignete Cycloalkylreste sind z.B. Cyclopentyl-, Cyclohexyl-, Cycloheptyl-, Cyclopentenyl-, Cyclohexenyl-, Cycloheptenyl-, Piperidyl- oder Morpholinylrest.
Die Arylreste leiten sich von ein- oder mehrkernigen carbocyclischen oder heterocyclischen Aromaten ab und können als Substituenten Alkylreste von 1 bis 4 C-Atomen und/oder Halogenatome, bevorzugt Fluor oder Chlor tragen. Geeignete Arylreste sind z.B. der Phenyl-, Naphthyl-, Pyridyl-, oder Benzylrest.

Die Herstellung der erfindungsgemäßen Copolymeren erfolgt durch Copolymerisation von 50 bis 99,9 Gew.-%, bevorzugt 70 bis 99,9 Gew.-% der Monomeren der Formel (III) und 0,1 bis 50 Gew.-%, bevorzugt 0,1 bis 30 Gew.-% der Monomeren der Formel IV nach üblichen radikalischen Polymerisationsverfahren .

$$R^1R^2C = CR^3COOR^4 \qquad \text{(III)}$$

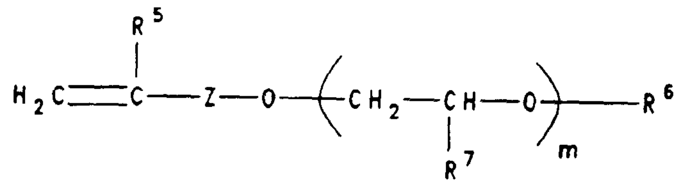

(IV)

Ein geeignetes Herstellungsverfahren besteht darin, die Monomeren der Formeln III und IV in einem organischen Lösungsmittel zu lösen und in Gegenwart eines Radikalstarters bei einer Temperatur im Bereich von 30 bis 150°C zu polymerisieren. Als Lösungsmittel eignen sich aromatische Kohlenwasserstoffe, wie z. B. Toluol, Xylol, Trimethylbenzol, Dimethylnaphthalin oder Gemische dieser aromatischen Kohlenwasserstoffe. Auch handelsübliche Gemische aus aromatischen Kohlenwasserstoffen wie z. B. Solvent Naphtha oder Shellsol AB® (Hersteller: Shell) finden Verwendung. Als Lösungsmittel sind ebenfalls aliphatische Kohlenwasserstoffe geeignet. Auch alkoxylierte aliphatische Alkohole oder deren Ester wie z. B. Butylglykol finden als Lösungsmittel Verwendung, bevorzugt aber als Gemisch mit aromatischen Kohlenwasserstoffen.

Als Radikalstarter werden üblicherweise gebräuchliche Starter wie Azo-bis-isobutyronitril, Ester von Peroxicarbonsäuren wie z.B. t-Butyl-perpivalat und t-Butyl-per-2-ethylhexanoat oder Dibenzoylperoxid verwendet.

Bei den Monomeren der Formel III handelt es sich um ethylenisch ungesättigte Carbonsäureester, die mindestens eine, höchstens zwei Carbonsäureeinheiten der Formeln $COOR^4$, $CH_2COOR^4$ enthalten.
Bei den Monomeren der Formel III kann es sich um Ester von Monocarbonsäuren, wie Acrylsäure, Methacrylsäure oder Zimtsäure mit $C_8$- bis $C_{40}$-Alkoholen, bevorzugt Acrylsäure mit $C_{12}$-$C_{24}$-Alkoholen, besonders bevorzugt von Acrylsäure mit $C_{18}$-, $C_{20}$- und/oder $C_{22}$-Alkoholen handeln. Geeignete Alkohole zur Esterherstellung sind z. B. Kokosfettalkohol, Talgfettalkohol, Laurylalkohol, Myristylalkohol, Cetylalkohol und Stearylalkohol.
Bei den Monomeren der Formel III kann es sich auch um Ester von Dicarbonsäuren handeln. Bevorzugt werden die Halbester der Dicarbonsäuren eingesetzt, wie z. B. die Halbester der Maleinsäure, Fumarsäure oder Itaconsäure mit $C_8$- bis $C_{40}$-Alkoholen.

Bei den Monomeren der Formel IV kann es sich um Veretherungsprodukte oder Veresterungsprodukte von Polyoxyalkylenethern mit $R^6$ = H handeln.

Diese Polvoxyalkylenether mit $R^6$ = H lassen sich nach bekannten Verfahren durch Anlagerung von α-Olefinoxiden, wie Ethylenoxid, Propylenoxid und/oder Butylenoxid an polymerisierbare niedere, ungesättigte Alkohole der Formel V

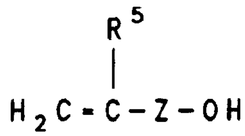

(V)

herstellen. Solche polymerisierbaren niederen ungesättigten Alkohole sind z. B. Allylalkohol, Methallylalkohol, Butenole wie 3-Buten-1-ol, 1-Buten-3-ol oder Methylbutenole wie 2-Methyl-3-buten-1-ol, 2-Methyl-3-buten-2-ol oder 3-Methyl-3-buten-1-ol. Bevorzugt sind Anlagerungsprodukte von Ethylenoxid und/oder Propylenoxid an Allylalkohol.

Eine nachfolgende Veretherung dieser Polyoxyalkylenether mit $R^6$ = H zu Verbindungen der Formel IV mit $R^6$ = $C_1$- bis $C_{30}$-Alkyl, Cycloalkyl oder Aryl erfolgt nach an sich bekannten Verfahren. Geeignete Verfahren sind z.B. aus J. March, Advanced Organic Chemistry, 2. Auflage, S. 357f (1977) bekannt.

Die Veretherungsprodukte der Polyoxyalkylenether mit $R^6$ = H der Formel IV lassen sich auch herstellen, indem α-Olefinoxide, bevorzugt Ethylenoxid, Propylenoxid und/oder Butylenoxid an Alkohole der Formel VI

$$R^6 - OH \qquad (VI)$$

worin $R^6$ gleich $C_1$- bis $C_{30}$-Alkyl, Cycloalkyl oder Aryl,
nach bekannten Verfahren anlagert und mit polymerisierbaren niederen ungesättigten Halogeniden der Formel VII

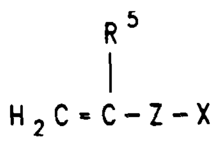

(VII)

umsetzt, wobei X für ein Halogenatom steht und $R^5$ und Z die zuvor angegebene Bedeutung besitzen. Als Halogenide werden bevorzugt die Chloride und Bromide eingesetzt. Geeignete Herstellungsverfahren werden z.B. in J. March, Advanced Organic Chemistry, 2. Auflage, S. 357f (1977) genannt.

Die Veresterung der Polyoxyalkylenether mit $R^6$ = H erfolgt durch Umsetzung mit gängigen Veresterungsmitteln wie Carbonsäurehalogeniden, Carbonsäureanhydriden oder Carbonsäureestern mit $C_1$- bis $C_4$-Alkoholen. Bevorzugt werden die Säurehalogenide und -anhydride mit $C_1$- bis $C_{30}$-Alkyl, Cycloalkyl oder Aryl verwendet. Die Veresterung wird im allgemeinen bei Temperaturen von 0 bis 200°C, vorzugsweise 10 bis 100°C durchgeführt. Das Carbonsäurederivat wird im allgemeinen in einer, bezogen auf die Alkoholgruppe des Polyoxyalkylenethers, stöchiometrischen Menge eingesetzt. Es ist jedoch möglich, die Säurekomponente im Überschuß, z.B. in einem Überschuß von 20 bis 100 %, wie auch in Unterschuß zuzugeben. Die Veresterung wird zweckmäßg in einem Lösungsmittel durchgeführt. Geeignete Lösungsmittel sind beispielsweise aromatische Kohlenwasserstoffe, z.B. Alkylaromaten, wie Toluol, Xylol, Trimethylbenzole, Tetramethylbenzole, Dimethylethylbenzole, Dimethylnaphthalin sowie Aromatengemische.

Für den Fall der zuvor beschriebenen acylierten Polyoxyalkylenether mit $R^6$ = C(O)-$R^8$ können die erfindungsgemäßen Copolymere auf zwei Wegen hergestellt werden.
Einerseits lassen sich die Polyoxyalkylenether mit $R^6$ = H direkt mit den ethylenisch ungesättigten Carbonsäureestern der Formel III copolymerisieren und anschließend durch Zusatz von Carbonsäurederivaten zu den erfindungsgemäßen Copolymeren verestern, andererseits kann man auch zunächst die Polyoxyalkylenether mit $R^6$ = H durch Zusatz von Carbonsäurederivaten zu den Monomeren der Formel IV verestern und anschließend mit den ethylenisch ungesättigten Carbonsäureestern der Formel III copolymerisieren. Wegen den unterschiedlichen Reaktivitäten der zur Polymerisation eingesetzten Monomeren resultieren aus beiden Herstellungsverfahren unterschiedliche Molekulargewichtsverteilungen.

Bei den Monomeren der Formel IV gibt der Index m den Alkoxylierungsgrad, d.h. die Anzahl der Mole an α-Olefinoxid an, die pro Mol Alkohol der Formel V oder VI angelagert werden.

Die erfindungsgemäßen Copolymeren sind in organischen Lösungsmitteln wie Toluol und Xylol löslich, ebenso in Rohöl, paraffinhaltigem Rohöl und paraffinhaltigen Rohölprodukten, Rückstandsölen, Erdöldestillaten , wie z.B. Diesel, Hydraulikölen, sowie Gemischen aromatischer und aliphatischer Kohlenwasserstoffe, wie sie z.B. unter den Bezeichnungen Shellsol®AB, Shellsol®R oder Shellsol®A (Hersteller: Shell) und Solvesso®100, Solvesso®200 oder Actrel®

(Hersteller: Esso Chemie) im Handel sind.

In den erfindungsgemäßen Copolymeren können die Monomere III und IV in beliebiger Verteilung vorliegen, wobei die Verteilung vorzugsweise statistisch ist. Die Molekulargewichte bzw. Molmassenverteilungen der erfindungsgemäßen Copolymeren sind durch einen K-Wert von 10 bis 100, vorzugsweise 10 bis 80 Eigenviskosität einer 5-Gew.-%igen Polymerlösung in Toluol (gemessen nach Ubbelohde) charakterisiert. Die Molekulargewichte $\overline{M}_n$ können in einem Bereich von 1 000 bis 300 000, bevorzugt 5 000 bis 200 000, liegen und beispielsweise nach der Gel-Permeations-Chromatographie-Methode mit Polystyrol-Eichung bestimmt werden.

Die erfindungsgemäßen und bekannten Copolymeren können ganz allgemein bei paraffinhaltigen Ölen beliebigen Ursprungs als Fließverbesserer verwendet werden. Bei den Paraffinen kann es sich z.B. um geradkettige oder verzweigte Alkane mit 8 bis 100, vorzugsweise 10 bis 70 C-Atomen handeln. Die erfindungsgemäßen und bekannten Copolymeren besitzen in den verschiedensten paraffinhaltigen Ölen eine breite Wirksamkeit. Sie sind deshalb allgemein anwendbar, z.B. in Rohölen, anderen paraffinhaltigen Ölen und paraffinhaltigen Ölprodukten unterschiedlichster Herkunft. Als paraffinhaltige Öle werden dabei z.B. Rohöle, andere paraffinhaltige Öle und paraffinhaltige Ölprodukte verstanden, wie sie bei der Verarbeitung von Rohölen anfallen, beispielsweise als Destillationsprodukte wie Dieselkraftstoff oder Hydrauliköl.

Besonders geeignet sind sie als Fließverbesserer für Roh- und Rückstandsöle. In Compositions and Properties of Petroleum, F. Enke Publishers, Stuttgart 1981, S. 1 bis 37 sind paraffinhaltige Öle beschrieben, für die die erfindungsgemäßen Copolymere ebenfalls als Kristallisationsinhibitoren geeignet sind.

Man kann die erfindungsgemäßen und bekannten Copolymeren aus dem Lösungsmittel abtrennen und die abgetrennten Copolymeren dem Öl zusetzen. Will man die Copolymeren aus dem Reaktionsgemisch isolieren, so ist dies z. B. durch Abdestillieren des Lösemittels oder durch Ausfällen, z. B. durch Zugabe von Aceton, möglich. Es kann jedoch vorteilhaft sein, die Fließverbesserer nicht zu isolieren, sondern die bei der Polymerisation erhaltene Lösung dem Erdöl zur Verbesserung der Fließeigenschaften zuzugeben. Im allgemeinen werden die erfindungsgemäßen Copolymeren dem Öl in solchen Mengen zugegeben, daß der Gehalt der Copolymeren im Bereich von 10 bis 10000 Gew.-ppm, bevorzugt im Bereich von 50 bis 5000 Gew.-ppm liegt. Die optimale Anwendungskonzentration kann bei unterschiedlichen Ölen unterschiedlich sein.

Sie kann gegebenenfalls leicht ermittelt werden, beispielsweise indem man durch routinemäßige Stockpunktbestimmungen (z.B. gemäß DIN ISO 3016 vom Oktober 1982 oder ASTM-Norm Nr. 97B, Section 6f) oder durch routinemäßige Viskositätsmessungen feststellt, mit welcher Anwendungskonzentration eine optimale Verbesserung des Fließverhaltens eintritt. Die Zugabe der erfindungsgemäßen und bekannten Copolymeren kann bereits im Bohrloch für das Rohöl erfolgen, aber auch vor oder während seines Transportes, seiner Lagerung und/ oder seiner Weiterverarbeitung.

Die erfindungsgemäßen und bekannten Copolymeren verbessern das Fließverhalten von paraffinhaltigen Ölen vor allem bei tiefen Temperaturen, was durch größere Erniedrigungen der Stockpunkte im Vergleich zu Paraffininhibitoren des Standes der Technik angezeigt wird. Falls es zur Bildung von Niederschlägen durch Kristallisation des Paraffins kommt, werden durch das Vorhandensein der erfindungsgemäßen und bekannten Copolymeren nicht so kompakte und/oder nicht so stark haftende Ablagerungen gebildet. Die Handhabbarkeit von paraffinhaltigen Ölen, wie Rohölen, Rückstandsölen, Öldestillaten, wie z.B. Dieselkraftstoffen, Mineralölen, Schmierölen, Hydraulikölen usw. ist bei tiefen Temperaturen beim Zusatz der erfindungsgemäßen und bekannten Copolymeren also insgesamt deutlich verbessert und Verstopfungen bei Transport, Lagerung und/oder Verarbeitung treten nicht so leicht auf. Das gilt auch für sonst schwierig gegen Kristallisation von Paraffinen zu inhibierende Öle.

Die erfindungsgemäßen Copolymere können auch in Verbindung mit weiteren Komponenten eingesetzt werden. Besonders wirksam als Fließverbesserer sind Zusammensetzungen, die 10 bis 90 Gew.-% des Copolymers und 10 bis 90 Gew.-% eines Polyacrylsäure-$C_8$-$C_{24}$-alkylesters enthalten.

Ebenfalls sehr wirksam sind Zusammensetzungen, die 10 bis 90 Gew.-% des Copolymers und 10 bis 90 Gew.-% eines aromatischen Lösemittels enthalten.

Die Eigenstockpunkte von 50 Gew.-%igen Lösungen der erfindungsgemäßen und bekannten Copolymeren in aromatischen Lösemitteln und deren Gemischen wie z. B. in Toluol, Xylol oder Shellsol AB® liegen unterhalb 20°C und damit deutlich unter denen herkömmlicher Fließverbesserer. Die Zugabe zum Erdöl bzw. zur Erdölfraktion kann folglich ohne vorheriges Erwärmen und/oder aus konzentrierter Lösung erfolgen.

Besonders geeignet sind Copolymere, bei denen die Eigenviskosiät einer 5- Gew.-% igen Polymerlösung in Toluol, bestimmt nach Ubbelohde, zwischen 10 und 100 liegt.

Die Wirksamkeit der erfindungsgemäß hergestellten Co- bzw. Terpolymerisate und der bekannten Copolymerisate wird durch die Bestimmung der Stockpunkte (Pour points) gemäß der Methode nach DIN ISO 3016 beschrieben. Bei dieser Methode werden die nichtadditivierten bzw. die mit den Polymerisaten additivierten Rohölproben unter definierten Bedingungen nach vorangehender Aufwärmung und anschließender definierter Abkühlung auf die Fließfähigkeit geprüft. Mit den erfindungsgemäßen und bekannten Polymerisaten wurden die Stockpunktuntersuchungen mit einem indischen Rohöl vorgenommen, das in unbehandeltem Zustand einen Stockpunkt von 29°C aufweist.

Die erhaltenen Resultate sind in Tabelle 1 zusammengefaßt. Die jeweils genannten Einsatzkonzentrationen (ppm)

beziehen sich jeweils auf Polymerisate, die 50 % Wirkstoff enthalten. Produkte mit höherem Wirkstoffgehalt werden mit Lösemitteln auf einen 50 %igen Wirkstoffgehalt verdünnt, Produkte mit niedrigerem Wirkstoffgehalt werden in einer entsprechend höheren Einsatzmenge zudosiert.
Tabelle 2 zeigt Vergleichsversuche mit bekannten Stockpunkterniedrigern.

Tabelle 3 zeigt die Eigenstockpunkte der erfindungsgemäßen Copolymere.

Die folgenden Beispiele sollen die Erfindung erläutern, ohne sie einzuschränken.

I. Darstellung der Monomeren

Im Folgenden soll die Herstellung einiger Monomeren beschrieben werden, bei denen es sich nicht um gängige Handelsprodukte handelt. Die Bezeichnung EO steht für Ethylenoxid-Einheiten, die Bezeichnung PO steht für Popylenoxid-Einheiten.

1. Darstellung von Allylpolyglykol-benzoylester

In einen 500 ml 4-Halskolben mit Rührer, Kontaktthermometer, Rückflußkühler und Gaseinleitungsrohr werden 28,2 g Benzoylchlorid und 73,2 g Allylpolyglykol (7 EO) in 100 g Toluol gelöst. Es wird 8 Stunden bei 60 °C gerührt, wobei zur Beschleunigung des HCl-Austrags Stickstoff durch die Lösung geblasen wird. Nach beendeter Reaktion wird das Lösungsmittel im Vakuum entfernt. Man erhält 90 g (96 % d. Th.) eines hellgelben Öls.
IR (Film): 1705 $cm^{-1}$ (-C(O)-O-).
$^{1}H$-NMR ($CDCl_3$/TMS i. Standard): 7,45 ppm (m,3H); 8,04 ppm (m,2H).

2. Darstellung von Allylpolyglykol-stearoylester

Analog I.1.
IR (Film): 1720 $cm^{-1}$ (-C(O)-O-)
$^{1}H$-NMR ($CDCl_3$/TMS i. Standard): 0,8 ppm (t,3H); 1,3 ppm (s,30H); 1,6 ppm (m,2H); 2,3 ppm (t,2H).

3. Darstellung von Allylpolyglykol-acetat

30,6 g Acetanhydrid und 110 g Allylpolyglykol (7 EO) werden in 140 g Toluol 5 Stunden bei 75 °C gerührt. Anschließend werden Toluol und Essigsäure durch Destillation im Vakuum entfernt. Man erhält 121 g (Ausbeute quantitativ) eines rotbraunen Öls.
IR (Film): 1725 $cm^{-1}$ (-C(O)-O-).
$^{1}H$-NMR ($CDCl_3$/TMS i. Standard): 2,06 ppm (s,3H).

II. Darstellung der Copolymeren

Die Prozentangaben sind in allen Fällen als Gewichtsprozente zu verstehen. Die Eigenviskositätswerte K werden nach Ubbelohde bei 25 °C in Toluol bei einer Polymerkonzentration von 5 Gew.-% bestimmt.

Die Polymerisationen werden in einem 1 l-Fünfhalskolben, ausgestattet mit Ankerrührer, Rückflußkühler, Kontaktthermometer, Gaseinleitungsrohr und Tropftrichter durchgeführt. Die zur Polymerisation vorgelegten Lösungen werden mit Stickstoff gespült.

1. Darstellung eines Copolymers aus Stearylacrylat und 10 Gew.-% Allylpolyglykol

90 g Stearylacrylat und 10 g Allylpolyglykol (7 EO) werden in 74 g Toluol unter Durchleiten von Stickstoff auf 50 °C erwärmt. Bei dieser Temperatur wird über einen Zeitraum von 30 Minuten eine Katalysatorlösung von 1,0 g Azo-bis-isobutyronitril in 25 g Toluol zugegeben. Man rührt jeweils eine Stunde bei 60, 70, 80 und 90 °C und erhält so ein hellgelbes Copolymer, das mit Toluol auf einem Feststoffgehalt von 50 % eingestellt wird. Dieses Gopolymer besitzt einen K-Wert (5%-ig) von 30. Der Eigenstockpunkt der Polymerlösung liegt bei 18 °C.

2. Darstellung eines Copolymers aus Stearylacrylat und 10 Gew.-% Allylmethylpolyglykol

112,5 g Stearylacrylat und 12,5 g Allylmethylpolyglykol (6 EO) wurden unter Erwärmen in 100 ml Toluol gelöst und wie in Beispiel II.1. beschrieben mit Azo-bis-isobutyronitril polymerisiert. Man erhält ein Copolymer, das mit Toluol auf einen Feststoffgehalt von 50% eingestellt wird und einen K-Wert (5%-ig) von 25 besitzt.

3. Copolymerisation in Butyldiglykol/Shellsol AB®

133 g Stearylacrylat und 7 g Allylpolyglykol (7 EO) wurden unter Erwärmen auf 50 °C und Durchleiten von Stickstoff in einer Mischung aus 15 g Butyldiglykol und 15 g Shellsol AB® gelöst. Durch Zugabe einer Lösung von 0,7 g Azo-bis-isobutyronitril in 15 g Butyldiglykol und 15 g Shellsol AB® über einen Zeitraum von 30 Minuten und anschließendes Nachheizen wurde ein Copolymer mit einem K-Wert (5%-ig) von 30 erhalten. Der Eigenstockpunkt der mit Shellsol AB® verdünnten 40 Gew.-%igen Polymerlösung liegt bei 18 °C.

4. Darstellung eines Copolymers aus Allylpolyglykol und Alkylacrylat unter Katalyse durch tert.-Butyl-peroxypivalat

95 g Alkylacrylat (Kettenschnitt aus 42 % $C_{18}$-, 11 % $C_{20}$-, 45 % $C_{22}$- und 2 % $C_{24}$-Alkohol) und 5 g Allylpolyglykol (7 EO) wurden in 80 g Toluol gelöst und durch Zugabe einer Lösung von 0,75 g tert.-Butyl-peroxypivalat wie unter Beispiel II.1. beschrieben, polymerisiert. Das resultierende Polymer hat einen K-Wert (5%ig) von 30. Der Eigenstockpunkt der resultierenden Polymerlösung liegt bei 22 °C.

5. Copolymer aus Stearylacrylat und Allylpolyglykolacetat

95 g Stearylacrylat und 5 g des nach Beispiel I.1. hergestellten Allylpolyglykolacetats (7 EO) wurden analog Beispiel II.1. polymerisiert. Die resultierende 50 %ige Polymerlösung hat einen K-Wert (5%ig) von 33.

6. Copolymer aus Stearylacrylat und 5 % Allylpolyglykol

95 g Stearylacrylat und 5 g Allylpolyglykol (mit 4 EO) wurden analog Beispiel II.1. polymerisiert. Das Polymer hat einen K-Wert (5%ig) von 33.

7. Terpolymer aus Maleinsäure-stearylester, Stearylacrylat und 10 % Allylpolyglykol

48 g Maleinsäureoctadecylester, 41 g Stearylacrylat und 10 g Allylpolyglykol (7 EO) wurden in 100 g Toluol wie in Beispiel II.1. beschrieben polymerisiert. Das resultierende Polymer hat einen K-Wert (5%ig) von 15.

8. Veresterung eines Copolymerisats aus Stearylacrylat und Allylpolyglykol mit Acetylchlorid

100 g der 50 %igen Lösung eines Copolymers aus 90 g Stearylacrylat und 10 g Allylpolyglykol gemäß Beispiel II. 1 werden mit 3,0 g Acetylchlorid versetzt und 8 Stunden bei 75°C gerührt. Zur Beschleunigung des HCl-Austrags wird Stickstoff durch die Lösung geblasen. Das resultierende Polymer hat einen K-Wert (5 %ig) von 35.
$^1$H-NMR ($CDCl_3$/TMS i. Standard) = 2,05 ppm (s).

Analog Beispiel II.1. wurden folgende Copolymere auf Basis Stearylacrylat hergestellt:

| Beispiel | Comonomer | K-Wert |
|---|---|---|
| 9 | 10 % Allylalkohol (10 EO) | 45 |
| 10 | 2 % Allylalkohol (15 EO) | 40 |
| 11 | 5 % Allylalkohol (10 PO) | 36 |
| 12 | 5 % Allylalkohol (5 EO + 5 PO) | 42 |
| 13 | 5 % 2-Methyl-3-buten-2-ol (9 EO) | 37 |

Tabelle 1

| Produkt | Einsatzmenge (ppm) | Stockpunkt (°C) |
|---|---|---|
| Copolymer nach Beispiel II.1. | 300 | 15,7 |
| Copolymer nach Beispiel II.1. | 500 | 8,2 |
| Mischung aus 20% Copolymer nach Beispiel II.1. und 80% Polyacrylsäure-$C_{18}$-$C_{22}$-alkylester | 300 | 13,3 |
| " | 500 | 6,9 |
| Copolymer nach Beispiel II.2. | 300 | 12,3 |
| Copolymer nach Beispiel II.2. | 500 | 9,6 |
| Mischung aus 20% Copolymer nach Beispiel II.1. und 80% Polyacrylsäure-$C_{18}$-$C_{22}$-alkylester | 300 | 11,3 |
| " | 500 | 8,7 |
| Copolymer nach Beispiel II.3. | 300 | 17,1 |
| Copolymer nach Beispiel II.3. | 500 | 13,8 |
| Copolymer nach Beispiel II.4. | 300 | 15,1 |
| Copolymer nach Beispiel II.4. | 500 | 11,7 |
| Copolymer nach Beispiel II.5. | 300 | 16,9 |
| Copolymer nach Beispiel II.5. | 500 | 9,7 |
| Copolymer nach Beispiel II.6. | 300 | 15,5 |
| Copolymer nach Beispiel II.6. | 500 | 9,2 |

Fortsetzung Tabelle 1

| Produkt | Einsatzmenge (ppm) | Stockpunkt (°C) |
|---|---|---|
| Terpolymer nach Beispiel II.7. | 300 | 17,2 |
| Terpolymer nach Beispiel II.7. | 500 | 12,4 |
| Copolymer nach Beispiel II.8. | 300 | 15,2 |
| Copolymer nach Beispiel II.8. | 500 | 10,2 |
| Copolymer nach Beispiel II.9. | 300 | 18,4 |
| Copolymer nach Beispiel II.9. | 500 | 12,8 |
| Copolymer nach Beispiel II.10. | 300 | 16,1 |
| Copolymer nach Beispiel II.10. | 500 | 9,4 |
| Copolymer nach Beispiel II.11. | 300 | 18,6 |
| Copolymer nach Beispiel II.11. | 500 | 12,8 |
| Copolymer nach Beispiel II.12. | 300 | 18,5 |
| Copolymer nach Beispiel II.12. | 500 | 13,3 |
| Copolymer nach Beispiel II.13. | 300 | 16,4 |
| Copolymer nach Beispiel II.13. | 500 | 11,9 |

Tabelle 2 (Vergleichsbeispiele):

| Produkt | Einsatzmenge (ppm) | Eigenstockpunkt (°C) |
|---|---|---|
| Paradyne 70® | 300 | 25,5 |
| Paradyne 70® | 500 | 23,0 |
| Paradyne 85® | 300 | 30,6 |
| Paradyne 85® | 500 | 30,5 |
| Shellswim 5 T® | 300 | 21,3 |
| Shellswim 5 T® | 500 | 14,0 |

(fortgesetzt)

| Tabelle 2 (Vergleichsbeispiele): | | |
|---|---|---|
| Produkt | Einsatzmenge (ppm) | Eigenstockpunkt (°C) |
| Shellswim 11 T® | 300 | 20,5 |
| Shellswim 11 T® | 500 | 14,0 |

Die in Tabelle 2 genannten Fließverbesserer sind handelsübliche Produkte der Firmen Exxon (Paradyne 70®, Paradyne 80®) und Shell (Shellswim 5 T®, Shellswim 11 T®)

| Tabelle 3 | |
|---|---|
| Produkt | Eigenstockpunkt (°C) |
| Copolymer nach Beispiel II.1. (50%ig) | 18 |
| Copolymer nach Beispiel II.3. (40%ig) | 18 |
| Copolymer nach Beispiel II.4. (48%ig) | 22 |
| Copolymer nach Beispiel II.9. (53 %ig) | 19 |
| Copolymer nach Beispiel II.10. (57 %ig) | 21 |

**Patentansprüche**

**1.** Copolymere enthaltend 50 bis 99,9 Gew.-% mindestens eines wiederkehrenden Strukturelementes der Formel I

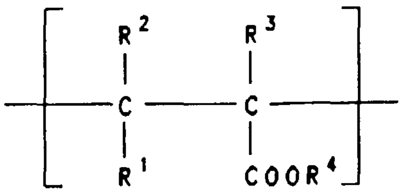

(I)

worin

$R^1$ und $R^2$ unabhängig voneinander für Wasserstoff, Phenyl oder eine Gruppe der Formel $COOR^4$ stehen,
$R^3$ für Wasserstoff, Methyl oder eine Gruppe der Formel $CH_2COOR^4$ steht, oder
$R^2$ und $R^3$ zusammen für $C_4$-bis $C_7$-Alkylen stehen und
$R^4$ für Wasserstoff, $C_8$- bis $C_{40}$-Alkyl oder $C_8$- bis $C_{40}$-Alkenyl steht,

mit der Maßgabe, daß wiederkehrende Strukturelemente der Formel I mindestens eine, höchstens zwei Carbonsäureeinheiten der Formeln $COOR^4$, $CH_2COOR^4$ in einem Strukturelement enthalten und 0,1 bis 50 Gew.-% mindestens eines wiederkehrenden Strukturelementes der Formel II

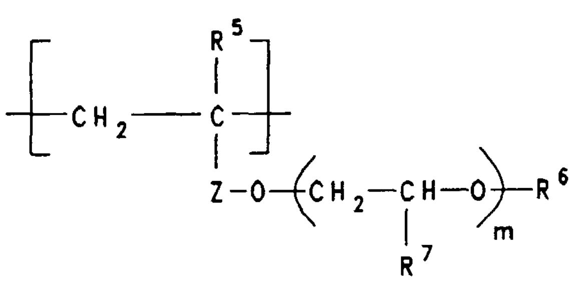

(II)

worin

$R^5$ für Wasserstoff oder Methyl steht,
Z für $C_1$- bis $C_3$-Alkylen steht,
$R^6$ für Wasserstoff, $C_1$- bis $C_{30}$-Alkyl, Cycloalkyl, Aryl oder -C(O)-$R^8$ steht,
$R^7$ für Wasserstoff, $C_1$- bis $C_{20}$-Alkyl steht,
$R^8$ für $C_1$- bis $c_{30}$-Alkyl, $C_3$- bis $C_{30}$-Alkenyl, Cycloalkyl oder Aryl steht und
m eine Zahl von 1 bis 60 bedeutet, mit der Maßgabe, daß falls $R^6$ gleich Wasserstoff ist, $R^1$ und $R^2$ nicht gleichzeitig Wasserstoff sind.

**2.** Copolymere nach Anspruch 1, dadurch gekennzeichnet, daß

$R^1$ und $R^2$ unabhängig voneinander für Wasserstoff oder eine Gruppe der Formel $COOR^4$ stehen,
$R^4$ für $C_{10}$- bis $C_{24}$-Alkyl steht,
$R^6$ für Wasserstoff oder $C_1$- bis $C_{24}$-Alkyl steht,
$R^7$ für Wasserstoff oder Methyl steht und
$R^8$ für $C_1$- $C_{22}$-Alkyl oder Phenyl steht.

**3.** Copolymere nach Anspruch 1 oder 2, dadurch gekennzeichnet, daß die Eigenviskosität einer 5-Gew.-%igen Polymerlösung in Toluol, bestimmt nach Ubbelohde, zwischen 10 und 100 liegt.

**4.** Paraffinhaltige Öle enthaltend Copolymere nach Anspruch 1 in einer wirksamen Menge von 10 bis 10000 Gew.-ppm.

**5.** Verfahren zur Herstellung der Copolymeren nach Anspruch 1, dadurch gekennzeichnet, daß man 50 bis 99,9 Gew.-% der Monomeren der Formel III

$$R^1R^2C{=}CR^3COOR^4 \qquad (III)$$

und 0,1 bis 50 Gew.-% der Monomeren der Formel IV

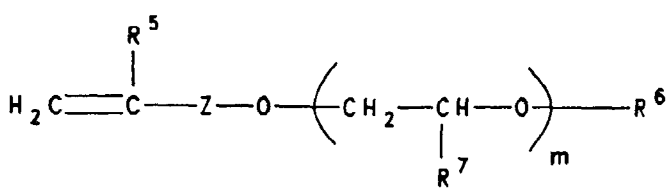

(IV)

radikalisch polymerisiert, worin $R^1$ bis $R^8$, Z und m die in Anspruch 1 definierten Bedeutungen besitzen.

**6.** Verfahren nach Anspruch 5, dadurch gekennzeichnet, daß man zwischen 50 bis 99,9 Gew.-% der Monomere der Formel III
und 0,1 bis 50 Gew.-% der Monomere der Formel IV in einem organischen Lösungsmittel löst und in Gegenwart eines Radikalstarters bei 30 bis 150°C polymerisiert.

**7.** Verwendung von Copolymeren enthaltend 50 bis 99,9 Gew.-% mindestens eines wiederkehrenden Strukturelementes der Formel I

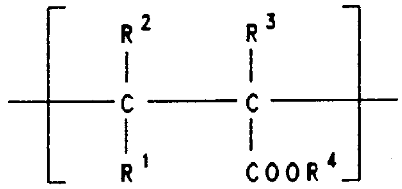

(I)

worin

$R^1$ und $R^2$ unabhängig voneinander für Wasserstoff, Phenyl oder eine Gruppe der Formel $COOR^4$ stehen
$R^3$ für Wasserstoff, Methyl oder eine Gruppe der Formel $CH_2COOR^4$ steht, oder $R^2$ und $R^3$ zusammen für $C_4$- bis $C_7$-Alkylen stehen und

$R^4$ für Wasserstoff, $C_8$- bis $C_{40}$-Alkyl oder $C_8$- bis $C_{40}$-Alkenyl steht, mit der Maßgabe, daß wiederkehrende Strukturelemente der Formel I mindestens eine, höchstens zwei Carbonsäureeinheiten der Formeln $COOR^4$, $CH_2COOR^4$ im wiederkehrenden Strukturelement enthalten
und 0,1 bis 50 Gew.-% mindestens eines wiederkehrenden Strukturelementes der Formel II

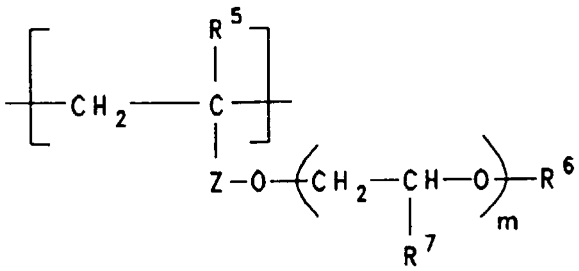

(II)

worin

$R^5$ für Wasserstoff oder Methyl steht,
Z für $C_1$- bis $C_3$-Alkyl steht,
$R^6$ für Wasserstoff, $C_1$- bis $C_{30}$-Alkyl, Cycloalkyl, Aryl oder -C(O)-$R^8$ steht,
$R^7$ für Wasserstoff, $C_1$- bis $C_{20}$-Alkyl steht,
$R^8$ für $C_1$- bis $C_{30}$-Alkyl, $C_3$- bis $C_{30}$-Alkenyl, Cycloalkyl oder Aryl steht,
m eine Zahl von 1 bis 60 bedeutet, **in einer Zusatzmenge von 10 bis 10000 Gew.-ppm** zur Verbesserung der Fließfähigkeit von paraffinhaltigen Ölen.

**8.** Verwendung gemäß Anspruch 7, dadurch gekennzeichnet, daß

$R^1$ und $R^2$ unabhängig voneinander für Wasserstoff oder $COOR^4$ stehen,
$R^4$ für $C_{10}$- bis $C_{24}$-Alkyl steht,
$R^6$ für Wasserstoff oder Methyl steht,
$R^7$ für Wasserstoff oder Methyl steht und
$R^8$ für $C_1$- bis $C_{22}$-Alkyl oder Phenyl steht.

**9.** Verwendung gemäß Anspruch 7, dadurch gekennzeichnet, daß

$R^1$ und $R^2$ für Wasserstoff stehen,
$R^3$ für Wasserstoff oder Methyl steht und
$R^6$ für Wasserstoff steht.

**10.** Verwendung von Zusammensetzungen enthaltend 10 bis 90 Gew.-% eines Copolymers gemäß Anspruch 1 und 10 bis 90 Gew.-% eines Polyacrylsäure-$C_8$-$C_{24}$-alkylesters zur Verbesserung der Fließfähigkeit von paraffinhaltigen Ölen.

**11.** Verwendung von Zusammensetzungen enthaltend 10 bis 90 Gew.-% eines Copolymers gemäß Anspruch 1 und 10 bis 90 Gew.-% eines aromatischen Lösemittels zur Verbesserung der Fließfähigkeit von paraffinhaltigen Ölen.

**12.** Zusammensetzung enthaltend 10 bis 90 Gew.-% eines Copolymers gemäß Anspruch 1 und 10 bis 90 Gew.-% eines Polyacrylsäure-$C_8$-$C_{24}$-alkylesters.

**13.** Zusammensetzung enthaltend 10 bis 90 Gew.-% eines Copolymers gemäß Anspruch 1 und 10 bis 90 Gew.-% eines aromatischen Lösungsmittels.

**14.** Copolymere nach Anspruch 1, enthaltend

| | |
|---|---|
| 70 bis 99,9 Gew.-% | mindestens eines wiederkehrenden Strukturelementes der Formel I, und |
| 0,1 bis 30 Gew.-% | mindestens eines wiederkehrenden Strukturelementes der Formel II, |

worin m eine Zahl von 1 bis 30 bedeutet.

**15.** Copolymere nach Anspruch 1, 2 oder 14, dadurch gekennzeichnet, daß die Eigenviskosität einer 5-Gew.-%igen Polymerlösung in Toluol, bestimmt nach Ubbelohde, zwischen 10 und 80 liegt.

**16.** Paraffinhaltige Öle enthaltend Copolymere nach Anspruch 1, 2 oder 14 in einer wirksamen Menge von 50 bis 5000 Gew.-ppm.

**17.** Verfahren nach Anspruch 5 oder 6, dadurch gekennzeichnet, daß man 70 bis 99,9 Gew.-% der Monomeren der Formel III und 0,1 bis 30 Gew.-% der Monomeren der Formel IV einsetzt.

**18.** Verwendung gemäß Anspruch 7, dadurch gekennzeichnet, daß das Copolymer

| | |
|---|---|
| 70 bis 99,9 Gew.-% | mindestens eines wiederkehrenden Strukturelementes der Formel I, und |
| 0,1 bis 30 Gew.-% | mindestens eines wiederkehrenden Strukturelementes der Formel II, |

enthält, worin m eine Zahl von 1 bis 30 bedeutet.

**Claims**

**1.** A copolymer comprising 50 to 99.9% by weight of at least one recurring structural element of the formula I

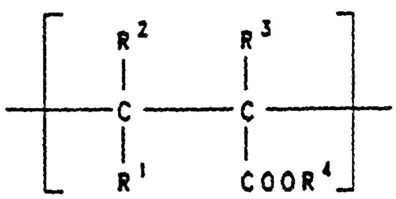

(I)

in which

$R^1$ and $R^2$ independently of one another are hydrogen, phenyl or a group of the formula $COOR^4$,
$R^3$ is hydrogen, methyl or a group of the formula $CH_2COOR^4$, or
$R^2$ and $R^3$ together are $C_4$- to $C_7$-alkylene, and
$R^4$ is hydrogen, $C_8$- to $C_{40}$-alkyl or $C_8$- to $C_{40}$-alkenyl,

with the proviso that recurring structural elements of the formula I contain at least one and not more than two carboxylic acid units of the formula $COOR^4$ or $CH_2COOR^4$ in one structural element,
and 0.1 to 50% by weight of at least one recurring structural element of the formula II

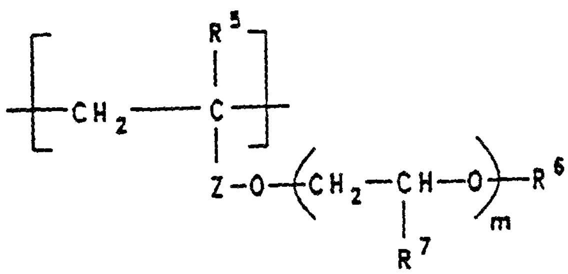

(II)

in which

$R^5$ is hydrogen or methyl,
Z is $C_1$- to $C_3$-alkylene,
$R^6$ is hydrogen, $C_1$- to $C_{30}$-alkyl, cycloalkyl, aryl or -C(O)-$R^8$,
$R^7$ is hydrogen or $C_1$- to $C_{20}$-alkyl,
$R^8$ is $C_1$- to $C_{30}$-alkyl, $C_3$- to $C_{30}$-alkenyl, cycloalkyl or aryl and
m is a number from 1 to 60, with the proviso that if $R^6$ is hydrogen, $R^1$ and $R^2$ are not simultaneously hydrogen.

**2.** A copolymer as claimed in claim 1, in which

$R^1$ and $R^2$ independently of one another are hydrogen or a group of the formula $COOR^4$,
$R^4$ is $C_{10}$- to $C_{24}$-alkyl,
$R^6$ is hydrogen or $C_1$- to $C_{24}$-alkyl,
$R^7$ is hydrogen or methyl and
$R^8$ is $C_1$-$C_{22}$-alkyl or phenyl.

**3.** A copolymer as claimed in claim 1 or 2, wherein the intrinsic viscosity of a 5% strength by weight polymer solution in toluene, determined by the Ubbelohde method, is between 10 and 100.

**4.** A paraffin-containing oil containing a copolymer as claimed in claim 1 in an effective amount of 10 to 10,000 ppm by weight.

**5.** A process for the preparation of a copolymer as claimed in claim 1, which comprises subjecting 50 to 99.9% by weight of the monomer of the formula III

$$R^1R^2C = CR^3COOR^4 \quad (III)$$

and 0.1 to 50% by weight of the monomer of the formula IV

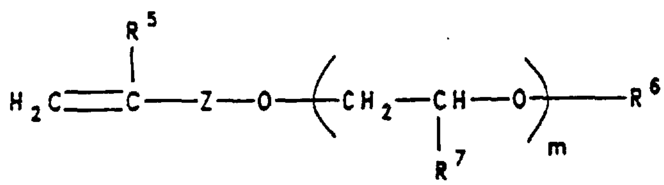

(IV)

in which $R^1$ to $R^8$, Z and m have the meanings defined in claim 1, to free radical polymerization.

**6.** The process as claimed in claim 5, wherein between 50 and 99.9% by weight of the monomer of the formula III and 0.1 to 50% by weight of the monomer of the formula IV are dissolved in an organic solvent and are polymerized at 30 to 150°C in the presence of a free radical initiator.

**7.** The use of a copolymer comprising 50 to 99.9% by weight of at least one recurring structural element of the formula I

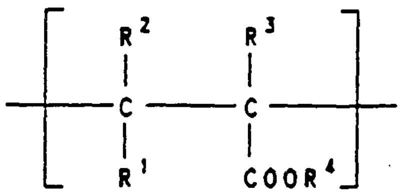

(I)

in which

$R^1$ and $R^2$ independently of one another are hydrogen, phenyl or a group of the formula $COOR^4$,
$R^3$ is hydrogen, methyl or a group of the formula $CH_2COOR^4$, or

$R^2$ and $R^3$ together are $C_4$- to $C_7$-alkylene, and
$R^4$ is hydrogen, $C_8$- to $C_{40}$-alkyl or $C_8$- to $C_{40}$-alkenyl,

with the proviso that recurring structural elements of the formula I contain at least one and not more than two carboxylic acid units of the formula $COOR^4$ or $CH_2COOR^4$ in the recurring structural element, and 0.1 to 50% by weight of at least one recurring structural element of the formula II

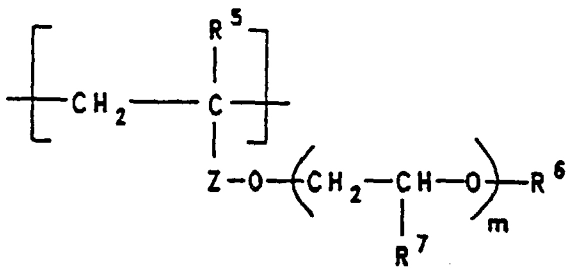

(II)

in which

$R^5$ is hydrogen or methyl,
Z is $C_1$- to $C_3$-alkylene,
$R^6$ is hydrogen, $C_1$- to $C_{30}$-alkyl, cycloalkyl, aryl or -C(O)-$R^8$,
$R^7$ is hydrogen or $C_1$- to $C_{20}$-alkyl,
$R^8$ is $C_1$- to $C_{30}$-alkyl, $C_3$- to $C_{30}$-alkenyl, cycloalkyl or aryl and
m is a number from 1 to 60, in an added amount of 10 to 10,000 ppm by weight for improving the flow properties of paraffin-containing oils.

**8.** The use as claimed in claim 7, wherein

$R^1$ and $R^2$ independently of one another are hydrogen or $COOR^4$,
$R^4$ is $C_{10}$- to $C_{24}$-alkyl,
$R^6$ is hydrogen or methyl,
$R^7$ is hydrogen or methyl and
$R^8$ is $C_1$- to $C_{22}$-alkyl or phenyl.

**9.** The use as claimed in claim 7, wherein

$R^1$ and $R^2$ are hydrogen,
$R^3$ is hydrogen or methyl and
$R^6$ is hydrogen.

**10.** The use of a composition comprising 10 to 90% by weight of a copolymer as claimed in claim 1 and 10 to 90% by weight of a polyacrylic acid $C_8$-$C_{24}$-alkyl ester for improving the flow properties of paraffin-containing oils.

**11.** The use of a composition comprising 10 to 90% by weight of a copolymer as claimed in claim 1 and 10 to 90% by weight of an aromatic solvent for improving the flow properties of paraffin-containing oils.

**12.** A composition comprising 10 to 90% by weight of a copolymer as claimed in claim 1 and 10 to 90% by weight of a polyacrylic acid $C_8$-$C_{24}$-alkyl ester.

**13.** A composition comprising 10 to 90% by weight of a copolymer as claimed in claim 1 and 10 to 90% by weight of an aromatic solvent.

**14.** A copolymer as claimed in claim 1, comprising

| | |
|---|---|
| 70 to 99.9% by weight | of at least one recurring structural element of the formula 1, and |
| 0.1 to 30% by weight | of at least one recurring structural |

element of the formula II

in which m is a number from 1 to 30.

**15.** A copolymer as claimed in claim 1, 2 or 14, wherein the intrinsic viscosity of a 5% strength by weight polymer solution in toluene, determined by the Ubbelohde method, is between 10 and 80.

**16.** A paraffin-containing oil comprising a copolymer as claimed in claim 1, 2 or 14 in an effective amount of 50 to 5,000 ppm by weight.

**17.** The process as claimed in claim 5 or 6, wherein 70 to 99.9% by weight of the monomer of the formula III and 0.1 to 30% by weight of the monomer of the formula IV are employed.

**18.** The use as claimed in claim 7, wherein the copolymer comprises

| | |
|---|---|
| 70 to 99.9% by weight | of at least one recurring structural element of the formula I, and |
| 0.1 to 30% by weight | of at least one recurring structrual element of the formula II, |

in which m is a number for 1 to 30.

**Revendications**

**1.** Copolymères contenant de 50 à 99,9 % en poids au moins d'un élément de structure répétitif de formule I :

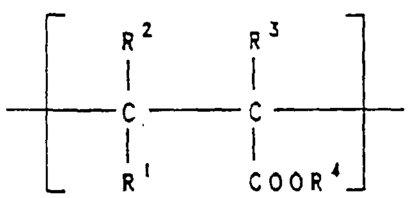

(I)

dans laquelle

$R^1$ et $R^2$ indépendamment l'un de l'autre représentent l'hydrogène, phényle ou un groupe de formule $COOR^4$,
$R^3$ représente l'hydrogène, méthyle ou un groupe de formule $CH_2COOR^4$, ou
$R^2$ et $R^3$ ensemble représentent alkylène en $C_4$ à $C_7$ et
$R^4$ représente l'hydrogène, alkyle en $C_8$ à $C_{40}$ ou alcényle en $C_8$ à $C_{40}$,

à la condition que les éléments de structure répétitifs de formule I contiennent au moins un, tout au plus deux motifs acide carboxylique de formules $COOR^4$, $CH_2COOR^4$ dans un élément de structure
et de 0,1 à 50 % en poids d'au moins un élément de structure répétitif de formule II :

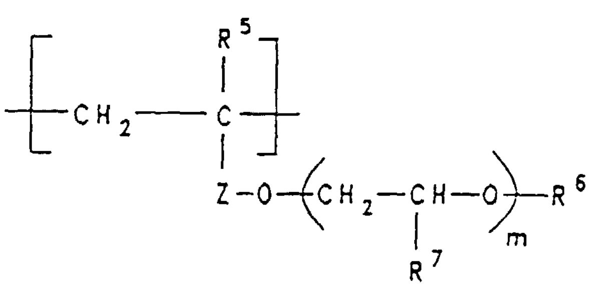

(II)

dans laquelle

$R^5$ représente l'hydrogène ou méthyle,
Z représente alkylène en $C_1$ à $C_3$,
$R^6$ représente l'hydrogène, alkyle en $C_1$ à $C_{30}$, cycloalkyle, aryle ou -C(O)-$R^8$,
$R^7$ représente l'hydrogène, alkyle en $C_1$ à $C_{20}$,
$R^8$ représente alkyle en $C_1$ à $C_{30}$, alcényle en $C_3$ à $C_{30}$, cycloalkyle ou aryle, et
m est un nombre de 1 à 60, à la condition que si $R^6$ représente l'hydrogène, $R^1$ et $R^2$ ne sont pas simultanément l'hydrogène.

**2.** Copolymères selon la revendication 1, caractérisés en ce que

$R^1$ et $R^2$, indépendamment l'un de l'autre, représentent l'hydrogène ou un groupe de formule $COOR^4$,
$R^4$ représente alkyle en $C_{10}$ à $C_{24}$,
$R^6$ représente l'hydrogène ou alkyle en $C_1$ à $C_{24}$,
$R^7$ représente l'hydrogène ou méthyle et
$R^8$ représente alkyle en $C_1$ à $C_{22}$ ou phényle.

**3.** Copolymères selon la revendication 1 ou 2, caractérisés en ce qu'ils ont une viscosité propre dans une solution de polymère à 5 % dans du toluène, déterminée selon Ubbelohde, comprise entre 10 et 100.

**4.** Pétroles paraffiniques contenant le copolymère selon la revendication 1, dans une quantité efficace de 10 à 10.000 ppm en poids.

**5.** Procédé pour la préparation des copolymères selon la revendication 1, caractérisé en ce qu'on polymérise radicalairement de 50 à 99,9 % en poids des monomères de formule III :

$$R^1R^2C=CR^3COOR^4 \qquad (III)$$

et de 0,1 à 50 % en poids des monomères de formule IV :

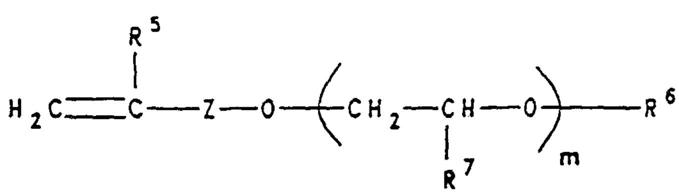

(IV)

dans lesquelles $R^1$ à $R^8$, Z et m ont les significations définies dans la revendication 1.

**6.** Procédé selon la revendication 5, caractérisé en ce qu'on dissout entre 50 et 99,9 % en poids du monomère de formule III et de 0,1 à 50 % en poids du monomère de formule IV dans un solvant organique et on polymérise en présence d'un amorceur radicalaire à 30 à 150°C.

**7.** Utilisation des copolymères contenant de 50 à 99,9 % en poids au moins d'un élément de structure répétitif de formule I :

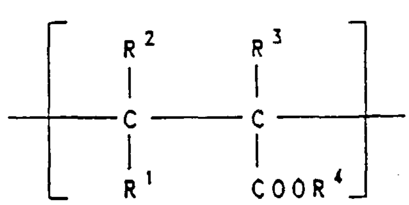

(I)

dans laquelle

$R^1$ et $R^2$ indépendamment l'un de l'autre représentent l'hydrogène, phényle ou un groupe de formule $COOR^4$,
$R^3$ représente l'hydrogène, méthyle ou un groupe de formule $CH_2COOR^4$, ou
$R^2$ et $R^3$ ensemble représentent alkylène en $C_4$ à $C_7$ et $R^4$ représente l'hydrogène, alkyle en $C_8$ à $C_{40}$ ou alcényle en $C_8$ à $C_{40}$,

à la condition que les éléments de structure répétitifs de formule I contiennent au moins un, tout au plus deux motifs acide carboxylique de formules $COOR^4$, $CH_2COOR^4$ dans un élément de structure
et de 0,1 à 50 % en poids d'au moins un élément de structure répétitif de formule II :

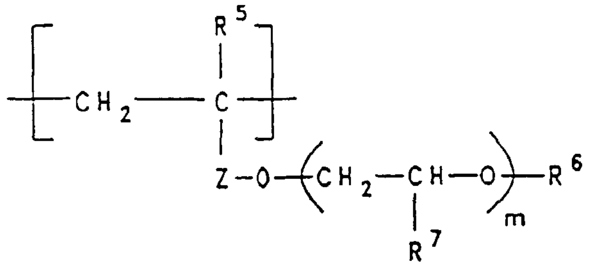

(II)

dans laquelle

$R^5$ représente l'hydrogène ou méthyle,
Z représente alkyle en $C_1$ à $C_3$,
$R^6$ représente l'hydrogène, alkyle en $C_1$ à $C_{30}$, cycloalkyle, aryle ou -C(O)-$R^8$,
$R^7$ représente l'hydrogène, alkyle en $C_1$ à $C_{20}$,
$R^8$ représente alkyle en $C_1$ à $C_{30}$, alcényle en $C_3$ à $C_{30}$, cycloalkyle ou aryle,
m est un nombre de 1 à 60, dans une quantité ajoutée de 10 à 10.000 ppm en poids pour améliorer le comportement de l'écoulement des huiles paraffiniques.

**8.** Utilisation selon la revendication 7, caractérisée en ce que

$R^1$ et $R^2$, indépendamment l'un de l'autre, représentent l'hydrogène ou $COOR^4$,
$R^4$ représente alkyle en $C_{10}$ à $C_{24}$,
$R^6$ représente l'hydrogène ou méthyle,
$R^7$ représente l'hydrogène ou méthyle et
$R^8$ représente alkyle en $C_1$ à $C_{22}$ ou phényle.

**9.** Utilisation selon la revendication 7, caractérisée en ce que

$R^1$ et $R^2$ représentent l'hydrogène,
$R^3$ représente l'hydrogène ou méthyle et
$R^6$ représente l'hydrogène.

**10.** Utilisation des compositions contenant de 10 à 90 % en poids d'un copolymère selon la revendication 1 et de 10 à 90 % en poids d'un ester d'alkyle en $C_8$-$C_{24}$ d'acide polyacrylique pour améliorer le comportement à l'écoulement des huiles paraffiniques.

**11.** Utilisation des compositions contenant de 10 à 90 % en poids d'un copolymère selon la revendication 1 et de 10 à 90 % en poids d'un solvant aromatique pour améliorer le comportement à l'écoulement des huiles paraffiniques.

**12.** Composition contenant de 10 à 90 % en poids d'un copolymère selon la revendication 1 et de 10 à 90 % en poids d'un ester d'alkyle en $C_8$-$C_{24}$ d'acide polyacrylique.

**13.** Composition contenant de 10 à 90 % en poids d'un copolymère selon la revendication 1 et de 10 à 90 % en poids d'un solvant aromatique.

**14.** Copolymères selon la revendication 1, contenant

de 70 à 99,9 % en poids au moins d'un élément de structure répétitif de formule I, et
de 0,1 à 30 % en poids au moins d'un élément de structure répétitif de formule II,

où m est un nombre de 1 à 30.

**15.** Copolymères selon la revendication 1, 2 ou 14, caractérisés en ce que la viscosité propre dans une solution de polymère à 5 % dans du toluène, déterminée selon Ubbelohde, est comprise entre 10 et 80.

**16.** Pétroles paraffiniques contenant des copolymères selon la revendication 1, 2 ou 14, dans une quantité efficace de 50 à 5.000 ppm en poids.

**17.** Procédé selon la revendication 5 ou 6, caractérisé en ce qu'on utilise de 70 à 99,9 % en poids de monomères de formule III et de 0,1 à 30 % en poids de monomères de formule IV.

**18.** Utilisation selon la revendication 7, caractérisée en ce que le copolymère contient

de 70 à 99,9 % en poids au moins d'un élément de structure répétitif de formule I, et
de 0,1 à 30 % en poids au moins d'un élément de structure répétitif de formule II,

dans laquelle m est un nombre de 1 à 30.